# EUROPEAN PATENT APPLICATION

(11) **EP 2 149 853 A2**
(43) Date of publication of application: **03.02.2010**
(21) Application number: 09386010.4
(22) Date of filing: 14.04.2009
(51) Int. Cl.: G06K 9/00, G06K 9/32

(54) **Method and system of detecting and recording vehicles in specific road lanes for enforcement purposes**

(30) Priority: 18.04.2008 GR 20080100272
(71) Applicant: Sakellariou, Andreas, 15341 Agia Paraskevi (GR)
(72) Inventor: Sakellariou, Andreas, 15341 Agia Paraskevi (GR)

(57) **Abstract**

Method and in-vehicle system with the purpose to locate identify and record near-by vehicles if certain conditions are met. The system detects the existence of near-by vehicles using a camera and applying automated number plate recognition technology while the absolute position of the detected vehicles is calculated as an offset to the absolute position of the carrier vehicle which in turn is obtained from the GPS. If a detected vehicle is on a specific road lane and if certain conditions are valid, the system can perform predetermined actions including capturing a digital image of the vehicle. More specifically, the invention uses automated number plate recognition technology in conjunction with a GPS unit in order to track, identify and obtain the lane-specific positioning of vehicles in the vicinity of a carrier vehicle. With this method and the related invention, the automated spatial identification of vehicles moving in a specific lane in the road network is made possible from a mobile system for bus-only or emergency lane enforcement and other purposes.

## Description

### Field of the invention

The invention refers both to a method and to a vehicle-mounted (on-board) system with the purpose to locate, identify and record near-by vehicles if certain conditions are met. The system detects the existence of near-by vehicles capturing images from a camera and applying automated number plate recognition technology. The exact location of the carrier vehicle is obtained via the integrated global positioning unit and then the absolute position of the detected vehicles is calculated based on their relative position to the carrier vehicle. If the absolute position of a detected vehicle is found to be on a specific road lane and if certain preprogrammed conditions are fulfilled, then the system can perform a number of predetermined actions including storing a picture of the vehicle. More specifically, the invention uses automated number plate recognition technology in conjunction with global navigation satellite systems in order to track, identify and obtain lane-accurate positioning of vehicles in the vicinity of a carrier vehicle. With this method and the related system, the automated spatial identification of vehicles moving in a specific lane in the road network is made possible for enforcement and other purposes.

### Description of the prior art

During the recent years, various global navigation satellite systems (GNSS) are being used in the transportation field for obtaining the position of vehicles especially in navigation and driver information applications. Such systems include among others: GPS, GLONASS, LORAN, GALILEO which are used alone or complementing each other, combined optionally with accuracy augmentation services like Differential GPS, A-GPS, WAAS, EGNOS and HEPOS. For the sake of simplicity, within this document the more familiar term GPS is used to refer to any global navigation satellite system receiver with or without any of the accuracy augmentation services.

Image capturing for further processing is performed using either analog cameras (CCTV type) where their video signal is digitized in a next stage or digital cameras which provide direct digital image output. Camera types also vary in terms of the image sensor used (CCD or CMOS), size, sensitivity, color depth, scan type (interlaced or progressive scan), optics and other characteristics, all of them selected specifically for every potential application.

On the other hand, automated number plate reading (ANPR) technology is being used the recent years in a multitude of applications ranging from access control and tolling applications to traffic violation recording systems. The technology enables images of vehicles captured by a camera to be analyzed and processed using special optical character recognition algorithms and potential license plate numbers to be identified and extracted in alphanumeric form.

Automated monitoring, counting and recording of vehicles moving in specific lanes are typically performed with stationary devices which are installed in road-side poles or in gantries above the road. The drawback of using stationary devices is that the "control spot" is permanent and a priori known to the drivers, thus presenting an opportunity to be intentionally avoided. For example, in bus-only lanes where stationary enforcement devices are used, it is easy for the potential violators to either be informed in advance for the position or just visually spot the supporting pole or structure of the devices while driving illegally in a bus-only lane. In these cases they can slightly deviate and avoid the control spot for a short distance and then get back driving in the bus-only lane, thus eliminating the effectiveness of such measures.

There are also similar devices that are installed on-board in moving or stationary vehicles equipped with the added capability of ANPR. Their camera aims the vehicles moving in front or to the rear of the carrier vehicle. When the carrier vehicle is moving exclusively in a specific lane they can detect and/or record the preceding or following vehicles. One typical application is bus-only lane enforcement where such devices are installed on-board in buses so they can detect number plates of vehicles moving in the same lane thus recording bus-only lane violators. But in real world, bus-only lanes are not contiguous (interrupted by crossroads, building entrances etc) and also bus routes are not executed exclusively on bus-only lanes.

Moreover, while in duty, buses could move outside bus-only lane limits (for various reasons including obstacles or temporary road works). In all the above cases separately or combined, vehicle detection could lead to false violation recordings since the detected vehicles would move outside the bus-only lanes, while the device would consider erroneously that the bus is still moving on a bus-only lane. So, this class of devices would produce a significant number of recorded violations with minimal reliability which would require significant administrative resources to be filtered if this would technically possible at all.

### Description of the invention

The present invention automatically detects and identifies moving vehicles, determining at the same time the specific road lanes (or segments) they are on, assisted by a GPS unit that operates simultaneously in real-time. Following that, certain preprogrammed actions are performed, for example an image of the vehicle is capture and stored to document the incident (optionally stamped with the current date/time, location longitude/latitude, street address, number plate of the vehicle, current speed of the carrier vehicle etc) or in case of the detection of a stolen vehicle, the authorities are informed accordingly.

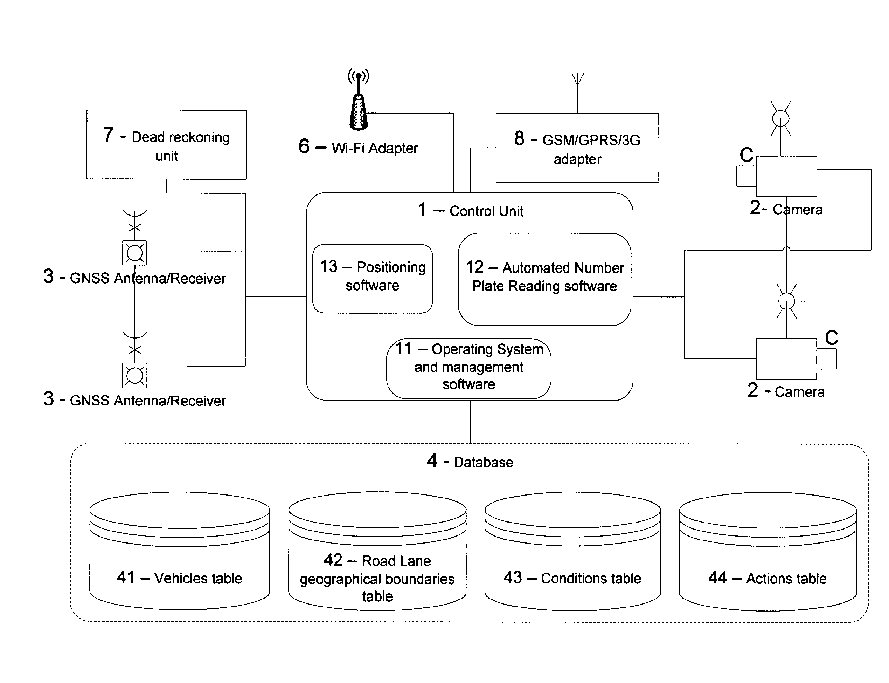

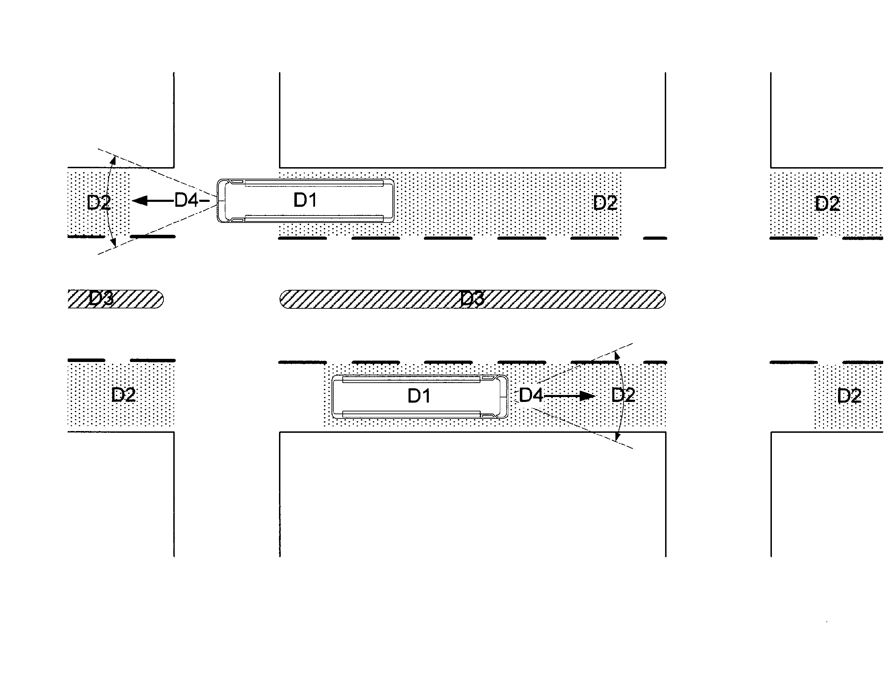

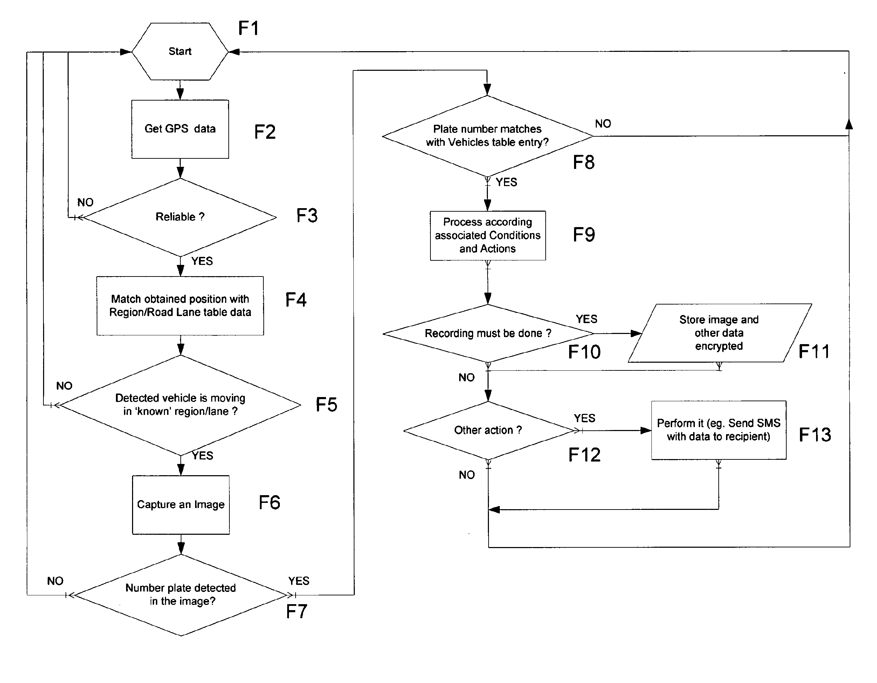

As shown in Fig 1, the apparatus consists of a control unit [1], a typical automotive PC, which includes standard hardware such as a motherboard, microprocessor, RAM memory, hard disc or other storage unit (i.e. solid state memory), communication ports and various suitable interfaces. It can optionally be connected to and communicate with other vehicle subsystems. It can display information and accept commands from optional equipment like standard or touch-screen, LCD screen with or without separate keyboard.

The system includes also optionally one or more wireless communications adapters (i.e. wireless LAN [6], Bluetooth, GSM/GPRS/EDGE/HSDPA [8]) for data exchange with a central backoffice unit or for alert or control purposes.

As a minimum, the system is equipped with operating and management [11], positioning [13] and Automated Number plate reading [12] software. It contains a database [4] to store Vehicle data along with their respective plate numbers [41], Road lane geographical boundaries [42], Conditions [3] and Actions [44].

It has also a GPS module [3] and optionally a dead reckoning unit [7]. Potentially additional GPS modules (i.e. a second one in the opposite side on the carrier vehicle) could increase positioning accuracy or provide a redundant solution if the first unit is obstructed or is out of order. Each GPS module feeds continuously the control unit with time, location, speed and course data along with additional data as described in related protocols (i.e. NMEA 0183) including among others the number of satellites in view and reception quality/reliability indicators such as HDOP, VDOP, PDOP and TDOP. Refresh rate is set according to the expected carrier vehicle top speed (i.e. 1 to 5Hz).

In an urban environment with tall buildings, narrow streets, tunnels or similar conditions where satellite signal reception suffers in terms of quality and reliability, the system may be complemented by a dead reckoning unit [7]. It is actually a gyroscope based device that can provide relative motion data to the control unit while satellite data are not adequate or reliable, in order to continue its positioning function.

The system comprises in addition one or more cameras [2] for both number plate recognition and scenery image recording (surrounding a detected vehicle) when needed. Many variations can be used, indicatively some of them:
a. One camera for number plate recognition and scenery recording. In that case the camera aims the region of interest (i.e. the area in front of the carrier vehicle along its axis) and is used for both functions, first of all for image capture for the number plate recognition process and then for the incident scenery recording if needed. To accomplish its purpose, camera's field of view is wide enough to allow visual confirmation that the recording vehicle was actually moving on the specific lane and location from the surrounding scenery and possible lane markings.
b. More than one cameras as in [a] above, with the purpose to provide coverage in additional visual areas (i.e. one looking to the front another looking backwards)
c. A specially configured ANPR camera (usually monochrome, infra red sensitive equipped with IR an illumination unit) with the purpose to reliably recognize number plates in any lighting environment, day or night, without being affected by vehicle lights, sunlight or plate reflections. This camera is configured to have a relatively narrow field of view to increase effectiveness of number plate recognition given that a separate camera (usually color), with wider field of view, is used for scenery imaging.
d. As [c] above, in cases where the system is used for monitoring and counting, so overview imaging is not needed.
e. All the possible combinations of the above

### Advantages

With the present invention, conditional (certain rules have to be satisfied) automated detection of vehicles moving in a specific road lane (or segment thereof) is possible using a combination of number plate recognition and GPS technologies from a onboard unit in a carrier vehicle.

Without human intervention, vehicles in the selected field of view can be detected and their absolute location concluded.

Especially, in bus-only lane enforcement applications the invention makes the measure to be meaningful and maximizes its effectiveness because it operates when exactly needed, catching violators that are actually obstructing a moving bus.

The deployment of the invention in bus-only lane enforcement presents the following benefits:
■ Violators of bus-only lanes that are recorded with the invention are those that drive their vehicles in front of a moving bus obstructing its route. Thus, major social consensus is achieved in favor of the enforcement measures since not only the violation is committed but also it has a real negative impact in the public transport system. It is the utmost "where and when needed" enforcement solution.
■ Enforcement cannot be avoided as is the case with stationary/fixed systems.
■ Does not require any kind of infrastructure (ie radio beacons, etc) to examine if it is currently on a specific road lane since this functionality is achieved matching GPS data with Road lane geographical data
■ Productivity in terms of monitored locations is multiplied in an order of magnitude (compared to stationary/fixed systems) since a moving automated system by definition scans multiple spots (i.e. the whole bus route) at the rate of its carrier vehicle own speed without involving any human resources.

Although qualitative criteria are used by the software to assess positioning data reliability and accuracy there may be cases where a false positioning value may be processed. Due to the nature of the road lanes that are narrow and lengthy the probability of an erroneous positioning value to fall within the boundaries of a lane is negligible. Even in that case, the photographic evidence recorded will provide adequate visual clues (i.e. lane markings not shown, surrounding scenery) for the incident to be dropped in a later inspection stage.

In Fig 3 the block diagram of the logical operation of the system is shown while in example 1 below a more extensive description of a preferred embodiment of the invention is given.

### Example 1- Monitoring, counting and violation recording in bus-only lanes

In a city, bus routes are performed in a mixed environment where bus-only and regular lanes are in being used. In bus-only lanes driving is allowed only to:
- Public transport vehicles (buses, trams, etc)
- Private buses (tourism and school buses)
- Motorbikes, bikes
- Emergency vehicles (ambulances, police, fire trucks)
   while at the same time prohibited to all other road users (private cars, taxis, etc)

Bus-only lanes in that city are not contiguous since they are interrupted at crossroads as well as in many other cases (i.e. entrances of garages, buildings etc). Since they extend only to a portion of the bus route network, the buses use both bus-only and regular lanes in their routes. In Fig. 2 shaded areas [D2] represent the portion of road lanes designated as bus-only whereas buses [D1] drive in the direction of the arrow.

During the initial phase of the deployment of the invention in the city of the example, the bus-only lanes would be broken down in linear segments/vectors. The geographical coordinates of both the starting and ending points of these segments/vectors would then be stored in the systems' database (Geographical boundaries table [42]). Additionally, the street name (and district) along with the range of street numbers are also stored correlated to the linear segment. The previous method is widely used in digital mapping and navigation applications and creates the digital model of the "specific lanes". Commonly accepted map matching algorithms (reverse geocoding) within the software perform the mapping of an arbitrary pair of coordinates of a point located in any of the linear segments (or in close vicinity) into a valid address in the form 'district'-'street name'-'street number'.

For the sake of simplicity, in this example, the lane width is assumed to be fixed (i.e. 3.75 m) and that wider lanes may be "described" with separate and parallel linear segments.

The database [4] has also the possibility to store a Conditions [43] and an Actions [44] table respectively. Some useful conditions that may be stored in the Conditions table include for example -expressed in plain English: "the detected vehicle is within a specific lane", "the detected vehicles plate number is associated with action X", "the detected vehicle has not been detected within a specific lane for the preceding X units of time", "the detected vehicle has not been detected within a specific lane for the preceding X units of length", "current date and time is ...", "current day of week is...","satellites in view are more than X", "the horizontal dilution of precision (HDOP) of the GPS signal is less than X" and many others. Accordingly, actions that may be stored in the Actions table might include for example -expressed in plain English: "capture and store image along with the related data", "send SMS message to predefined number X with the indication 'Stolen', *date-time, plate number, coordinates, district*/*street name*/*number*", "capture additional image if vehicle found on the specific lane within the next X time units" and many others including all the possible combinations.

The Vehicles data table in the database [4] is populated with data containing plate numbers or groups of them defined as templates (i.e. numbers starting with 'EA' followed by 4 numeric digits) along with pairs of conditions and associated actions. Each vehicle plate number (or group) is associated by the vehicle category (passenger car, bus, motorbike, ambulance, etc), so the system knows the type of the vehicle as son as it detects its plate number. This method allows the implementation of whitelisting (i.e. detected vehicles that need no action), blacklisting (i.e. in bus-lane applications, detected vehicles that will be recorded as performing violations) and many other useful functions.

Then the system may be installed on-board of buses that perform routes over bus-only lanes. The main control unit consists of an automotive computer [1], complete with motherboard, processor, RAM memory, hard disk, frame grabber and communication ports (USB, serial, Ethernet, keyboard+mouse), all in a metallic rigid enclosure. It is connected to the vehicle's electrical system and its power supply is especially designed to avoid battery discharge and to survive engine cranks.

A suitable camera [2] is mounted internally in the bus, behind the windscreen in a way to have an unobstructed forward view [D4] towards the vehicles directly in front of the bus. The horizontal and vertical orientation of the camera and the focal length of its lens are chosen so the captured images include not only the vehicle in front of the bus but also the surrounding scenery, for example the curbside and the lane markings, in a way that will provide the most documented visual proof that a violation was committed by the detected vehicle in a specific location. The camera may be equipped with auto-exposure or auto-iris mechanisms to adapt to various lighting environments. Shutter time is set or varies in a range of small values to assure adequate quality when shooting moving vehicles. In this specific example we may follow a low cost scenario and use an analog interlaced camera offering 520 TV lines resolution. The analog video signal output of the camera is connected to the frame grabber contained in the control unit and digital images with 768x576 pixels resolution can now be captured. Due to the fact that we capture images of moving target and this camera works in interlaced mode, we can digitize only one of the image fields (odd or even) to achieve optimum results. The geometric characteristics of the camera mounting and its field of view (angle, azimuth, vertical inclination) are also stored in the system.

With the above described configuration, we obtain the minimum cost using just one analog camera for both number plate reading and overview imaging, capable to operate when ambient lighting (natural or artificial) is adequate. Using other types or more than one camera, the system can respond to various application-specific requirements. For example, if higher resolution or simply better image quality is required, a digital camera with a resolution of 2, 3, 5 or 11 Mpixels can be used connected to a USB or Ethernet port. In that case the frame grabber functionality is not needed.

The GPS [3] antenna (or the unit itself in case that receiver and antenna are integrated) is installed in at the roof in the front part of the bus near the longitudinal axis. The horizontal distances of the GPS antenna from the longitudinal axis and the front side of the bus are measured and then stored in the system. In this example, an integrated GPS unit (antenna + receiver) will be used connected to the USB port of the control unit. Apart from the positioning data that the GPS receiver provides, it is also used for time synchronization purposes so the internal clock of the control unit has always the correct date and time settings.

The control unit is equipped with a high power wireless LAN adapter [6] for data exchange with a host computer in the depot where the buses are parked while off-duty.

When the system is switched on, the operating system is loaded and the application software which includes the positioning, the number plate recognition and the management and control modules takes control.

After a while and as soon as the GPS unit is able to receive reliable signals from the satellites, the system performs the algorithm roughly presented in Fig. 3 (F1). It is executed at least one time per second so the current position of the bus can be calculated. Then the Road Lanes geographical boundaries table [F4] of the database is processed to determine if the current position of the bus is found within the limits of one of the bus-only lanes stored in the system. If this is the case, image capturing by the camera [F6] is triggered and the number plate recognition process [F7] is started. If at least one plate number is detected and read, then, given the dimensions of the plate and the already stored geometric characteristics of the camera setup and the GPS antenna installation, the relative position of the plate number (and thus of the rear side of the vehicle) can be calculated. The absolute position of the plate number in 2-D space can also be calculated since the bus position (namely the GPS antenna absolute position) is already known. The absolute position of the plate number is then compared against the boundaries of the stored lane data (Road Lanes geographical boundaries Table [F8]) and if it is found within the area of one of the lanes then the Vehicles data table [F9] is searched for the plate number entry. If such an entry is matched, the system examines the associated preprogrammed conditions and performs any associated actions. For example, if the number plate indicates that the detected vehicle is an ambulance or another public transport bus both of which are allowed to drive on the bus-only lanes, the no action is performed [F10 No, F12 No]. If in contrast, the number plate indicates that the detected vehicle is not allowed to drive on bus-only lanes, the incident is considered a violation, so an image is captured and all necessary data are stored for documentation purposes [F11]. Moreover, if city ring or congestion charging measures are in place and the same vehicle performs an additional violation then the incident is also flagged accordingly. With the same method, several flexible enforcement scenarios are possible, indicatively date/time, location or plate number specific enforcement or any combination thereof.

While the bus is moving outside bus-only lanes [F5 No] the system does not captures images at all. If it reenters a bus-only lane then the algorithm is once again executed.

As a way to increase efficiency of the system, it may be set up to perform number plate reading in a sub region of the field of view (part of the image capture) thus limiting detection of vehicles in a narrow zone only in front of the bus while at the same time maintaining a larger overview image which is required for documentation purposes. That means that while only vehicles strictly in front of the bus are detected, the image may include the ambient scenery including the bus-only lane markings and the curb, providing an indisputable evidence of the violation. It is also possible to capture additional or a full sequence of images that would further document that the detected vehicle violated and was present in the bus-only lane more than one times and in more than one locations, consecutive or not.

Upon the end of its duty each bus drives to the depot where the stored violation data in digital form (image and related data) may be transferred to a'host computer via Wi-Fi, cable LAN, USB or serial communications. Then, the operator of host computer using appropriate software, may issue tickets to the registered owners of the violating vehicle or otherwise according to the local law.

### Example 2 - Monitoring, counting and violation recording in urban areas with restricted access

The system may be installed in a common police car which may move within a restricted or partially restricted area (i.e. only vehicles with plate numbers ending in an odd or even digit are allowed to enter each day) and record violations of the measure in a similar way as described previously for bus-only lanes.

In this case, the configuration may include more than one cameras (i.e. one looking forward another looking backward) to provide extra coverage. Also, stolen vehicles or vehicles with specific plate numbers may be recorded.

### Example 3 - Enforcement of diesel-engine vehicle restriction

Assuming that in an example city, diesel-engine equipped vehicles with a weight of less than 3.5 tons are not allowed to enter the center zone for environmental purposes, the enforcement of that policy can be achieved using relative information stored in the Vehicles data table of the database. Thus, each plate number detected is matched with an associated entry in the Vehicles data table and if license data show that it is equipped with a diesel engine, the incident is considered a violation treated similarly as in the previous examples.

### Scope of the invention

Although the present invention has been described in terms of the presently preferred embodiments, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A system that is installed on-board in a vehicle and includes a complete control unit with communication ports [1], camera [2], global navigation satellite system receiver [3], database [4], operating system and management software [11], positioning software [13], automated vehicle number plate reading software [12] and is **characterized by** the capability to detect and identify vehicles in view from their number plates, determine if they are currently on a specific road lane and take associated actions.

2. System according to claim 1 which can search, process, combine, match and store a) global navigation satellite system receiver [3] data, b) plate numbers detected [12] from images captured by cameras [2], c) vehicle license data [41] d) road lane boundaries [42] e) conditions [43] and f) actions [44] and performs parameterized actions including vehicle image and related data recording.

3. System according to claim 1 which communicates simultaneously with more than one global navigation satellite system receivers [3] fusing their data by software.

4. System according to claim 1 which includes more than one camera for number plate reading and/or overview image capture.

5. System according to claim 1 and claim 5 which includes infra-red camera equipped with infra-red illuminator [2] dedicated to number plate reading and an additional camera [2] for incident image capture (overview).

6. System according to claim 1 which includes a dead reckoning device [7] to keep track of the position in urban canyons, tunnels and other cases where satellite data are not reliable, weak or not existent.

7. Use of the system according to claims 1 up to including 7 for bus-only and emergency lane enforcement and recording of violations

8. A method which combines deployment of automated number plate reading and global navigation satellite data from an in-vehicle system to record bus-only and emergency lane violations.
